# EUROPEAN PATENT SPECIFICATION

(11) **EP 2 234 866 B1**
(45) Date of publication and mention of the grant of the patent: **13.06.2012**
(21) Application number: 07852137.4
(22) Date of filing: 20.12.2007
(51) Int. Cl.: B62D 33/077, B62D 24/00

(54) **ATTACHMENT ARRANGEMENT**
BEFESTIGUNGSANORDNUNG
DISPOSITIF DE FIXATION

(43) Date of publication of application: 06.10.2010
(73) Proprietor: VOLVO LASTVAGNAR AB, 405 03 Göteborg (SE)
(72) Inventor: GUSTAFSSON, Jens, S-431 36 Mölndal (SE); BERGLUND, Mattias, S-416 54 Göteborg (SE); LILJEBLAD,Benny, S-443 38 Lerum (SE); JOHANSSON, Matilda, S-431 46 Mölnldal (SE); WOKIL, Hayder, S-442 54 Ytterby (SE); REGNELL, Hans, S-442 50 Ytterby (SE)
(74) Representative: Fröhling, Werner Otto
(86) International application number: PCT/SE2007/001141
(87) International publication number: WO 2009/082274

(56) References cited:
- WO-A1-96/29212
- WO-A1-02/070301
- DE-C1- 4 343 158
- US-A- 5 634 605
- US-A1- 2005 134 069

## Description

### TECHNICAL FIELD

The present invention relates to an attachment arrangement for attaching together a first and a second structure of a vehicle having a longitudinal extension and a transversal extension together forming a horizontal plane. The arrangement comprises a first attachment member adapted to be attached to the first structure and a second attachment member adapted to be attached to the second structure. At least one of the first and second attachment members comprises a first attachment panel. The first attachment member further comprises a first and a second connection portion.

The present invention also relates to a vehicle comprising such an arrangement and method of attaching a first and a second vehicle structure utilizing such an attachment arrangement.

### BACKGROUND OF THE INVENTION

Trucks, or heavy vehicles, may generally be divided into two main fields: articulated and rigid trucks. In the field of rigid trucks, the truck is generally provided with a chassis onto which a body, in which cargo or equipment may be transported, is mounted. The body may be selected from a variety of suitable bodies and may for instance be: a van body; a wagon-bridge; a tank, or a concrete mixing container. Naturally, in order to obtain a secure mounting of the body onto the chassis, a reliable attachment system is required. One prior art attachment system generally includes a plurality of attachment arrangements, each arrangement comprising: a first steel plate welded to the chassis; a second steel plate welded to the body and a bolt connection connecting the two steel plates. If the body of the truck is to be replaced by another body, the bolt connection is firstly loosened and the first body is lifted off from the chassis. Steel plates are then welded onto the second body, the second body is lifted onto the chassis and the steel plates of the chassis are attached to the second body's steel plates by means of bolt connections. Should the first body be used on another truck, the steel plates welded to the first body firstly have to be removed and new steel plates have to be welded to the first body at locations corresponding to the steel plates attached to the chassis of the second truck. As may be realized from the above, mounting and/or replacement of a body to a chassis of a truck according to the prior art solution hereinabove is a cumbersome and time-consuming procedure.

In an attempt to overcome the drawbacks of the prior art, SE 523 168 proposes the use of an attachment system comprising a plurality of attachment arrangements, each attachment arrangement comprising a conical or spherical tap and a bracket having a correspondingly shaped indentation. The tap is attached to the body and the bracket is attached to the chassis, or vice versa.

When mounting a body onto a chassis using the '168 attachment system, the body is lowered down to the chassis while the tap of each attachment arrangement is guided into its corresponding indentation. Thus, the body is properly aligned with the chassis during the mounting, assuming that the taps and brackets are correctly placed with respect to one another.

However, there are some disadvantages of the '168 attachment system. For instance, the system generally requires that the taps and brackets are fixedly attached to the respective part of the vehicle. This fixed attachment may in itself be a cumbersome procedure which often requires that the taps and brackets are welded to the respective part of the vehicle. Furthermore, since the function of the'168 attachment system is dependent on a correct mutual location of each tap and bracket, the system does not allow for a general body to be mounted on a general chassis. Purely by way of example, it is not unlikely that a haulage contractor uses his own set of mutually placed taps and brackets for the chassis and bodies in his fleet, but it is far from certain that the vehicle body from a second haulage contractor will fit directly onto a vehicle chassis of the first contractor. Instead, the body and/or chassis would most likely firstly have to be re-fumished with taps and/or brackets at correct locations prior to the mounting.

Moreover, there is often a difference in stiffness between the chassis and the body, in particular a difference in torsional stiffness. As such, whenever the chassis and/or the body is subjected to loads, for instance when driving in rough terrain or when taking a sharp corner, there is a risk that either one of the chassis and the body is subjected to excessive loads due to the stiffness differences between the chassis and the body, unless the connection therebetween allows some relative displacement between the two components. However, the '168 attachment system is substantially rigid, hence it does not necessarily reduce the loads on the chassis and/or body.

Document US5634605 depicts a mounting clamp for a transport generator set, its disclosure covers the preamble feature of claims 1 and 13.

### SUMMARY OF THE INVENTION

The main object of the present invention is to provide an attachment arrangement which is easy to connect to a chassis and a body, respectively, of a vehicle.

A second object of the present invention is to provide an attachment arrangement which permits a relative displacement between a chassis and a body, respectively, of a vehicle.

A third object of the present invention is to provide an attachment arrangement wherein the stiffness of the arrangement may be adjusted during the procedure of mounting a body to a chassis.

A fourth object of the present invention is to provide an attachment arrangement which may permit initial misalignments of the relative location of a chassis and a body, respectively, of a vehicle.

A fifth object of the present invention is to provide an attachment arrangement which may allow for different widths of a chassis and a body, respectively, of a vehicle.

The main object is achieved by an attachment arrangement according to claim 1.

Thus, present invention relates to an attachment arrangement for attaching together a first and a second structure of a vehicle having a longitudinal extension and a transversal extension together forming a horizontal plane. The arrangement comprises a first attachment member adapted to be attached to the first structure and a second attachment member adapted to be attached to the second structure. At least one of the first and second attachment members comprises a first attachment panel. The first attachment member further comprises a first and a second connection portion. According to the invention, the first attachment member comprises a recess having a recess edge such that, when the attachment arrangement is in an attachment condition, the first and second attachment members are engaged by means of the first attachment panel such that:
- the recess edge is arranged to abut against at least a portion of the second attachment member for transferring load between the first and second attachment members in at least one direction substantially parallel to the horizontal plane, and
- the second member is arranged in the recess such that the first and second connection portions are located on opposite sides of the second attachment member for transferring load between the first and second attachment members in a direction substantially perpendicular to the horizontal plane.

As used herein, the expression "vehicle" encompasses all transport means which are adapted to travel on land and being provided with at least one wheel. Examples of transport means which fall within the above definition of a vehicle includes, but is not limited to, a rigid truck or a trailer.

As such, since the attachment arrangement of the present invention comprises a first attachment member with a recess adapted to engage with the second attachment member, a simple yet robust connection of the first and second structure is obtained. In particular, since the connection between the attachment members is obtained by a mutual engagement rather than by an additional member such as a bolt, the weight of the attachment arrangement may be kept low. Furthermore, the inventive attachment arrangement may be easily inspected visually when attached to a vehicle. As such, should either one of the first or second attachment members be worn or even broken during use, such a defect may easily be identified by simply looking at the attachment arrangement.

Furthermore, the attachment members may be designed to be relatively large, thus allowing a misalignment between the first and second structure. In particular, if one attachment arrangement is placed on each side of the chassis and body assembly, large differences in the widths of the two components may be allowed while still obtaining an appropriately robust and secure attachment of the body to the chassis.

Moreover, since the first and second attachment members are attached to one another by means of the first attachment panel, the flexibility of the first attachment panel may be used for obtaining an attachment arrangement which permits a relative displacement between e.g. a chassis and a body of a vehicle which in turn may reduce the loads on the chassis and/or body. In other words, the first attachment panel, having a bending stiffness, may be used as a biasing means in the attachment arrangement. Additionally, depending on the location of the first attachment panel in relation to the first or second attachment member, in particular the distance in the vertical direction which direction is perpendicular to the horizontal plane, the stiffness of the attachment arrangement may easily be adjusted.

A second aspect of the invention relates to a method of attaching a first and a second structure of a vehicle, utilizing the attachment arrangement according to the first aspect of the present invention, wherein the method comprises the steps of:
a) fixedly attaching one of the first or second attachment members to the first or second structure;
b) connecting the first and second attachment members such that they engage, and
c) fixedly attaching the remaining one of the first or second attachment members to the remaining one of the first or second structure.

The method above provides for a secure attachment of the first and second structures. In particular, should there be a misalignment between the location parallel to the horizontal plane between the first and second structures, this misalignment may be accounted for in the attachment arrangement during the attachment method.

In a preferred embodiment of the second aspect of the invention, the first attachment member comprises an attachment portion adapted to be attached to the first structure and the second attachment member comprises a second attachment portion adapted to be attached to the second structure. The preferred embodiment of the second aspect of the present invention further comprises the step of selecting an appropriate distance perpendicular to the horizontal plane between the first and second attachment portions in order to obtain a predetermined stiffness and/or pretension of the attachment arrangement, prior to the step of fixedly attaching the remaining one of the first or second attachment members.

This embodiment provides for an efficient way of adjusting the stiffness of the attachment arrangement. Thus, rather than using different attachment arrangements for different vehicles, e.g. depending on the expected loads on each vehicle, the same arrangement may be used for several vehicles and the actual stiffness of each attachment arrangement is then adjusted, or tuned, during the attachment procedure of the arrangement. Furthermore, the preferred embodiment of the second aspect of the present invention may also be used for adjusting the pretension of the attachment arrangement.

In another embodiment of the second aspect of the present invention, the first attachment member comprises the first attachment panel which in turn comprises an attachment portion adapted to be attached to the first structure and a flanged portion. The first attachment panel forms a first angle between the first attachment portion and the first flanged portion when the attachment arrangement is in an un-attached condition. The method further comprises the step of, when the second attachment member has been attached to the second structure and the first and second attachment members are connected to one another, fixedly attaching the first attachment member to the first structure by means of a tightenable connection arrangement, such as a bolt connection. The method further comprises the step of tightening the connection arrangement such that a second angle between the first attachment portion and the first flanged portion is obtained, which second angle differs from the first angle, such that the attachment arrangement becomes stiffened and/or pretensioned.

As such, rather than obtaining a stiffened and/or pretensioned attachment arrangement by adjusting the distance between the attachment portions of the first and second attachment members, the stiffness and/or pretension may be adjusted during the tightening of the connection arrangement, thus utilizing the tightening torque to also stiffen and/pretension the attachment arrangement.

### BRIEF DESCRIPTION OF THE DRAWINGS

The present invention will hereinafter be further explained by means of non-limiting examples with reference to the appended figures wherein:
- Fig. 1: is a schematic perspective view of a rigid truck comprising a body;
- Fig. 2: is a schematic end view of the chassis and body frames of the Fig. 1 truck;
- Fig. 3: is a schematic side view of the chassis and body frames of the Fig. 1 truck;
- Fig. 4: is a schematic view of a first embodiment of the attachment arrangement according to the present invention;
- Fig. 5: is a schematic perspective view of a second embodiment of the attachment arrangement according to the present invention;
- Fig. 6: is a schematic perspective view of a third embodiment of the attachment arrangement according to the present invention;
- Fig. 7: is a schematic perspective view of a fourth embodiment of the attachment arrangement according to the present invention;
- Fig. 8A: is a schematic perspective view of the first attachment member of a fifth embodiment of the attachment arrangement according to the present invention;
- Fig. 8B: is a schematic perspective view of the fifth embodiment of the attachment arrangement according to the present invention;
- Fig. 9: is a schematic perspective view of the Fig. 6 embodiment of the attachment arrangement, when mounted on the frames of a chassis and body, respectively;
- Fig. 10A: is a schematic rear view of the Fig. 6 embodiment of the attachment arrangement, prior to mounting a first attachment portion of the attachment arrangement to a first structure, and
- Fig. 10B: is a schematic perspective view of the Fig. 6 embodiment of the attachment arrangement, once the first attachment portion of the attachment arrangement has been mounted on the first structure.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

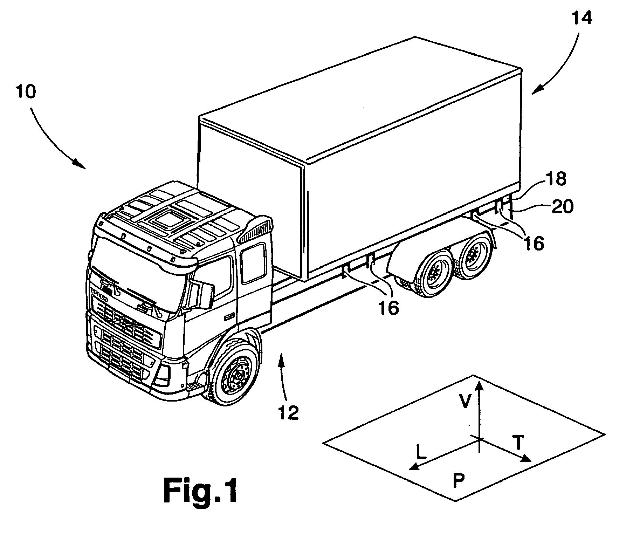

Fig. 1 schematically illustrates vehicle 10 which is exemplified by a rigid truck. A truck is a preferred type of vehicle for which the inventive attachment arrangement is used, but it should however be noted that the arrangement may also be used for other types of vehicles, such as trailers. The truck 10 comprises a chassis 12 and a body 14, which in Fig. 1 is exemplified by a van body. The body 14 is attached to the chassis 12 by means of an attachment system comprising a plurality of attachment arrangements 16. Since Fig. 1 is a perspective view of the truck 10 showing only one side of thereof, the attachment arrangements 16 of only one side of the truck 10 are visible. However, the attachment system generally comprises attachment arrangements 16 arranged on the opposite side of the truck as well. Furthermore, some attachment systems may include additional attachment arrangements 16 which are located in the front and/or rear end of the body 14 (not shown). In Fig. 1 each one of the attachment arrangements 16 are connecting a body frame 18 of the body 14 to a chassis frame 20 of the chassis 12, which is a preferred way of attaching the two structures. Generally, each longitudinal side of the body frame 18 is attached to the chassis frame 20 by three to five attachment arrangements 16. Purely by way of example, the longitudinal distance between two adjacent attachment arrangements 16 may be approximately 1 metre. The number of attachment arrangements and the distance between the arrangements may be adjusted depending *inter alia* on the differences in bending and torsional stiffness of the body frame 18 and the chassis frame 20.

Fig. 1 further illustrates that the vehicle 10 has a longitudinal dimension L extending from the rear to the front of the vehicle 10. Furthermore, the vehicle 10 has a transversal dimension T extending from one side to the other of the vehicle 10 and a vertical dimension V the direction of which is perpendicular to both the longitudinal L and transversal T dimensions. The longitudinal L and transversal L dimensions together form a plane P. If the vehicle 10 is located on a horizontally extending flat surface, the plane P will extend horizontally.

The chassis frame 20, as well as the body frame 18, generally comprises two longitudinally extending beams (not shown) which generally are connected to one another by means of a plurality of connection beams (not shown) each one substantially extending in the transversal dimension T.

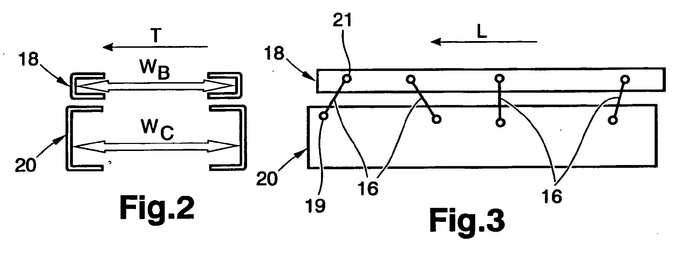

Fig. 2 illustrates an isolated end view of the chassis frame 20 and the body frame 18. Fig. 2 further illustrates that the outer width W_{C} of the chassis frame 20 may differ from the outer width W_{B} of the body frame 18. Thus, an attachment arrangement 16 should preferably be adapted to provide a secure attachment irrespective of such differences in outer widths W_{C}, W_{B}. Furthermore, Fig. 3 illustrates an isolated side view of the chassis frame 20 and the body frame 18. As may be gleaned from Fig. 3, one side of the body frame 18 is attached to one side of the chassis frame 20 by means of four attachment arrangements 16 and the location of the attachment points 19, 21, i.e. the points at which the arrangement 16 is attached to the body frame 18 and the chassis frame 20, respectively, may be located at a distance from one another in the longitudinal dimension L. As such, an attachment arrangement 16 should preferably be adapted to account for longitudinal misalignments as well.

Various embodiments of the attachment arrangement 16 according to the present invention will be described hereinbelow. A general feature of all the embodiments is that they are adapted to attach first and a second structure of a vehicle 10. In the embodiments below, the body frame 18 is used as an example of the first structure whereas the chassis frame 20 is used as an example of the second structure, although this relationship may of course be reversed so that the body frame 18 instead corresponds to the second structure. Should a body frame 18 be attached to a chassis frame 20 by means of an attachment system comprising a plurality of attachment arrangements 16 of the present invention, the attachment arrangements 16 are preferably located along the circumference of the body frame 18 and/or chassis frame 20. Furthermore, it should be realized that the attachment arrangement may be suitable for attaching other structures of the vehicle 10 than the ones mentioned above.

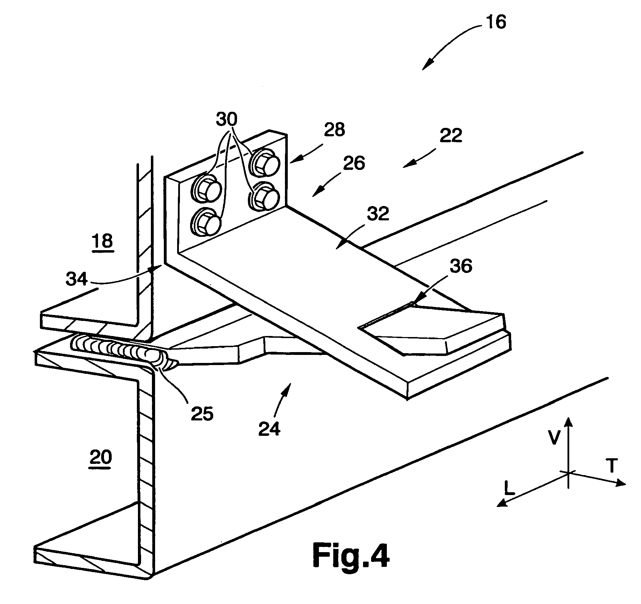

Fig. 4 illustrates an embodiment of the attachment arrangement 16 according to the present invention in an attachment condition. As may be gleaned from Fig. 4, the attachment arrangement 16 comprises a first attachment member 22 adapted to be attached to the first structure, i.e. the body frame 18, and a second attachment member 24 adapted to be attached to the second structure which in Fig. 4 is the chassis frame 20. In the Fig. 4 embodiment, the second attachment member 24 is constituted by a substantially rigid steel plate which is attached to the chassis frame by means of a weld joint 25, but the second attachment member 24 may of course assume other shapes which will be discussed in detail hereinbelow. Purely by way of example, the attachment member 24 may in some embodiments be constituted by a rod fixedly attached to the second structure.

In Fig. 4, there is a slight gap between the body frame 18 and the chassis frame 20, thus the total load of the body 14 is in the Fig. 4 embodiment carried by the attachment arrangement 16. However, the body frame 18 generally rests on the chassis frame 20 such that the greater part of the loads from the body 14 is transferred to the chassis frame 20 through contact forces between the body frame 18 and the chassis frame 20.

The first attachment member 22 comprises a first attachment panel 26. In fact, the attachment member 22 is in the Fig. 4 embodiment actually constituted by the first attachment panel 26. The attachment panel 26 in turn comprises a first attachment portion 28, adapted to be attached to the first structure 18. In the Fig. 4 embodiment, the attachment portion 28 is provided with openings (not shown) such that the attachment portion 28 may be attached to the first structure 18 by means of a bolt connection 30. The first attachment panel 26 further comprises a first flanged portion 32, wherein a transition from the first attachment portion 28 to the first flanged portion 32 occurs in a first intermediate portion 34. In the Fig. 4 implementation of the first attachment member 22, the first attachment portion 28 and the first flanged portion 32 thus form a unitary component which is a preferred implementation of the first attachment member 22. However, other implementations of the first attachment member 22 may comprise a plurality of separate components (not shown), attached to one another by conventional attachment methods such as gluing, welding, bracing, bolting etcetera.

The first flanged portion 32 is provided with a recess 36. In Fig. 4 the recess 36 is exemplified by an opening inscribed in the first flanged portion 32 although other implementations of the recess 36 of course are feasible.

Purely by way of example, the thickness of the first attachment panel 26 is within the range of 4 - 15 mm, preferably within the range of 6 - 10 mm. Furthermore, the distance between the first attachment portion 28 and the recess 36 preferably is in the range of 50 - 200 mm, preferably within the range of 100 -150 mm. The first attachment panel 26 is preferably made of metal such as aluminium or steel, but the first attachment panel 26 may also be made of any other material providing appropriate strength and fatigue properties. Purely by way of example, the first attachment panel 26 could in some embodiments of the present invention be made of carbon fibre.

The width, i.e. the extension along the longitudinal dimension L in Fig. 4, of the first attachment panel 26 may for example be within the range of 100 - 1000 mm. In particular, should the first attachment portion 28 be wide, for example 500 mm or more, the first attachment portion 28 will actually act as a stiffener to the structure onto which it is attached. As such, in the Fig. 4 embodiment, should the first attachment portion 28 be wider than approximately 500 mm, the stiffness, in particular the bending and torsional stiffness, of the body frame 18 will increase.

In the attachment condition illustrated in Fig. 4, the first attachment panel 26 and the second attachment member 24 engage. This engagement is in the Fig. 4 embodiment accomplished by the fact that second attachment member 24 extends through the recess 36. As such, relative motions in the longitudinal and vertical dimensions L, V between the first and second attachment members 22, 24 are substantially prevented by contact forces built up between the rim, i.e. the edge, of the recess 36 and the second attachment member 24. However, it should also be noted that the Fig. 4 attachment arrangement allows some relative motion between the first and second attachment members 22, 24 in the transversal dimension T since the first recess 36 may slide on the second attachment member 24. This transversal relative motion may preferably be utilized when mounting a first and second structure having different widths.

Furthermore, should the portion of the body frame 18 illustrated in Fig. 4 move upwardly in relation to the chassis frame 20, for instance if the vehicle 10 takes a sharp corner which results in inertial forces being imparted on the body 14, the attachment arrangement 16 of the present invention may actually allow a certain relative vertical displacement of the body frame 18 portion. This is since the first flanged portion 32 may be regarded as a cantilever which is attached to the first attachment portion 28 and to the second attachment member 24 at the location of the first recess 36. As such, should the body frame 18 portion and hence the first attachment portion 28 move upwardly, the first flanged portion 32 will deflect upwardly. However, due to the bending stiffness of the first flanged portion 32, the first attachment portion 28, and consequently the body frame 18 portion, will be imparted a substantially downwardly extending reaction force. Naturally, the larger the upward displacement of the first attachment portion 28, the larger the magnitude of the reaction force. In other words, the first flanged portion 32 provides for a resilient attachment of the first and second structures 18, 20 in a direction substantially perpendicular to the horizontal plane P defined by the longitudinal and transversal dimensions L, T.

In addition to the upward displacement of the first attachment portion 28, the magnitude of the reaction force is dependent *inter alia* on the bending stiffness of the first attachment panel 26. In fact, in Fig. 4 the magnitude of the reaction force is dependent on the stiffness of the first flanged portion 32. The bending stiffness of the first flanged portion 32 is in turn dependent on a plurality of parameters which includes, but is not limited to: the material and cross-section of the first flanged portion 32 as well as the distance between the first attachment portion 28 and the first recess 36. As for the just mentioned distance, the resulting bending stiffness is dependent on the distance parallel to the horizontal plane P as well as the vertical distance between the first attachment portion 28 and the first recess 36. The distance parallel to the horizontal plane P is generally set when manufacturing the attachment arrangement 16, but the vertical distance may actually be adjusted when attaching the first attachment member to the first structure 18. As such, the higher up the first attachment portion 28 is attached to the first structure 18, the larger the bending stiffness. Furthermore, should the first attachment portion 28 be attached to the first structure 18 at an elevation such that the first flanged portion 32 will experience an initial deflection, a pretensioned attachment arrangement 16 is obtained which will not allow any upward movement of the first attachment portion 28 unless the force imparted on the same exceeds the pretension force of the attachment arrangement 16. Naturally, the magnitude of the pretension force is also dependent on *inter alia* the vertical distance between the first attachment portion 28 and the first recess 36.

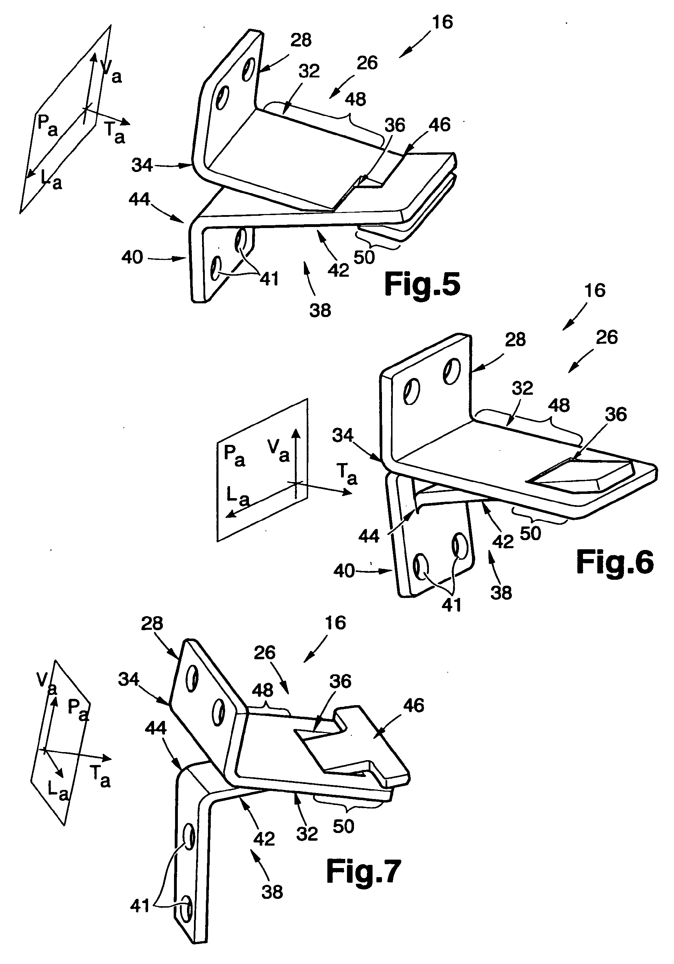

In the Fig. 4 embodiment of the present invention, only the bending stiffness of the first flanged portion 32 has been discussed. This is since the bending stiffness of the second attachment member 24 is considered to be substantially larger than the bending stiffness of the first flanged portion 32 in this embodiment. However, and as indicated in Figs. 5 - 7, the second attachment member 24 may be designed in a similar manner as the first attachment member 22, thus the second attachment member 24 may also contribute to the provision of a relative motion and/or a pretension force between the portions of the body frame 18 and the chassis frame 20. As such, the characteristics of the second attachment member 24 e.g. in terms of material and dimensions may preferably be similar to the characteristics of the first attachment panel 26 discussed above.

Figs. 5 - 7 illustrate various embodiments of the attachment member 16 of the present invention. However, what the embodiments all have in common is that the second attachment member 24 comprises a second attachment panel 38 which in turn comprises a second attachment portion 40, adapted to be attached to the second structure 20. In the embodiments illustrated in Figs. 5 - 7 each one of the second attachment portions 40 is provided with openings 41 adapted to receive a bolt connection (not shown). However and as previously indicated, the second attachment portion 40 may instead be adapted to be attached to the second structure 20 by means of other attachment methods which include, but are not limited to, welding, brazing, gluing etcetera.

In the embodiments illustrated in Figs. 5 - 7 each one of the second attachment panels 38 further comprises a second flanged portion 42, wherein a transition from the second attachment portion 40 to the second flanged portion 42 occurs in a second intermediate portion 44. Furthermore, as may be gleaned from any one of Figs. 5 -7, when the attachment arrangement 16 is in an attachment condition, the engagement between the first recess 36 and the second attachment member 24 occurs between the first recess 36 and the second flanged portion 42.

Furthermore, the first attachment panel 26, in each one of Figs. 5 - 7, extends in an attachment longitudinal dimension Lₐ and an attachment vertical dimension Vₐ, which dimensions form an attachment plane Pₐ. Furthermore, the first attachment panel 26 has an attachment transversal dimension Tₐ extending substantially perpendicular from the attachment plane Pₐ.

As may be realized when studying Figs. 5 - 7, the first recesses 36 and the second flanged portions 42 have different designs.

Starting with the Fig. 5 embodiment, the first recess 36 is designed as a first notch extending through approximately half the width of the first flanged portion 32 in substantially the attachment longitudinal dimension Lₐ. The second flanged portion 42 has a corresponding second notch 46 extending through approximately half the width of the second flanged portion 42. As such, the engagement between the first and second flanged portions 32, 42 occurs at the first and second notches 36, 46. As such, during the engagement between the first and second notches 36, 46, relative motion between the first and second attachment members 22, 24 is prevented in the attachment vertical dimension Vₐ; the attachment transversal dimension Tₐ as well as in a first direction along the attachment longitudinal dimension Lₐ due to contact forces built up between the edges of the first and second notches 36. 46. It should however be noted that the Fig. 5 embodiment does not prevent relative displacement between the first and second attachment members 22, 24 in a direction opposite to the first direction along the attachment longitudinal dimension Lₐ. As such, an attachment system comprising the attachment arrangement according to the embodiment illustrated in Fig. 5 preferably comprises an additional attachment arrangement 16 which is adapted to prevent a relative displacement in the direction opposite to the first direction. Such an additional arrangement 16 may preferably be an arrangement similar to the Fig. 5 arrangement although the locations of the first and second notches 36, 46 are switched.

As for the Fig. 6 embodiment, the first recess 36 is designed as a rectangular opening inscribed in the first flanged portion 32. The second flanged portion 42 is narrower than the first flanged portion 32 and the second flanged portion 42 is designed so as to extend through the opening 36 of the first flanged portion. It should be noted that the Fig. 6 embodiment is similar to the Fig. 4 embodiment although the substantially rigid Fig. 4 attachment member 22 has been replaced by the Fig. 6 attachment panel 38.

Regarding the Fig. 7 embodiment, the first recess 36 is designed as a rectangular opening located at the outer end, i.e. the end distal to the first intermediate portion 44, of the first flanged portion 32, such that only three sides of the opening 36 are defined by the first flanged portion 32. The outer end 46 of the second flanged portion 42, i.e. the end distal to the second intermediate portion 44, is substantially wider that the remaining portion of the second flanged portion 42 such that it assumes a T shape wherein the outer end 46 defines an attachment transversely extending bar of the T. As such, when the Fig. 7 arrangement 16 is in an attachment condition, the bar 46 of the T shaped second flanged portion 42 abuts the outer portion of the first flanged portion 32, thus forming an engagement wherein relative motion between the first and second attachment members 22, 24 is prevented in the attachment vertical dimension Vₐ and the panel longitudinal extension Lₐ due to contact forces built up between the edges of the first recess 36 and the second flanged portion 42.

As a further general remark for the embodiments of the present invention illustrated in Figs. 5 - 7, the first flanged portion 32 of each one of the embodiments may be regarded as comprising a first and a second connection portion 48, 50. The first connection portion 48 is located proximal to the first intermediate portion 34 and the second connection portion 50 is located distal to the first intermediate portion 34, along the extension of the first flanged portion 32. As may be gleaned from Figs. 5 - 7, the first and second connection portions 48, 50 are located on opposite sides of the second flanged portion 42 when the arrangement is in an attachment condition.

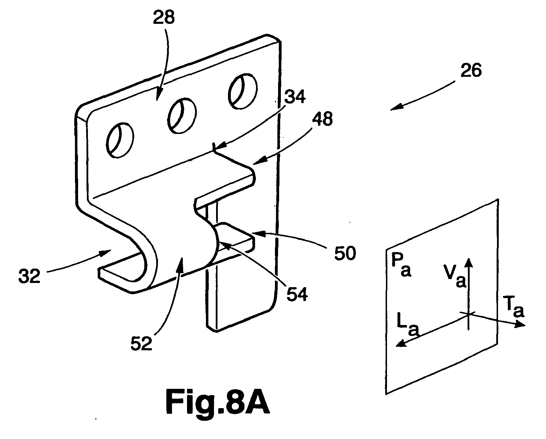

Fig. 8A illustrates the first attachment panel 26 of a further embodiment of the present invention. As with the Fig. 5 -7 embodiments, the first attachment portion 28 extends in an attachment longitudinal dimension Lₐ and an attachment vertical dimension Vₐ, which dimensions form an attachment plane Pₐ. Furthermore, the first attachment panel 26 has an attachment transversal dimension Tₐ extending substantially perpendicular from the attachment plane Pₐ.

Fig. 8A further illustrates that the first flanged portion 32 comprises two connection portions 48, 50 and that the first flanged portion 32 is bent such that the first and second connection portions 48, 50 are located at substantially the same distance from the first intermediate portion 34 in the attachment transversal dimension Tₐ. The first flanged portion 32 of the Fig. 8A embodiment further comprises a bridging portion 52 connecting the first and second connection portions 48, 50. The Fig. 8A bridging portion 52 assumes a substantially semi-circular shape but the bridging portion 52 may of course be designed in any other way, as long as it provides for the connection portions 48, 50 to be located at substantially the same distance from the intermediate portion 34 and also provides a flexibility in the attachment vertical dimension Vₐ. Fig. 8A further illustrates that the extension of the bridging portion 52 in the attachment longitudinal dimension is substantially smaller than the extensions of the first and second connection portions 48, 50 in the same dimension. In the embodiment illustrated in Fig. 8A, the bridging portion 52 extends from one end of the first and second connection portions 48, 50 to approximately the attachment longitudinal Lₐ centre of the connection portions 48, 50 wherein it terminates in an end surface 54. Thus, as compared to the embodiments illustrated in Figs. 5 - 7, the end surface 54 in Fig. 8A constitutes the recess edge.

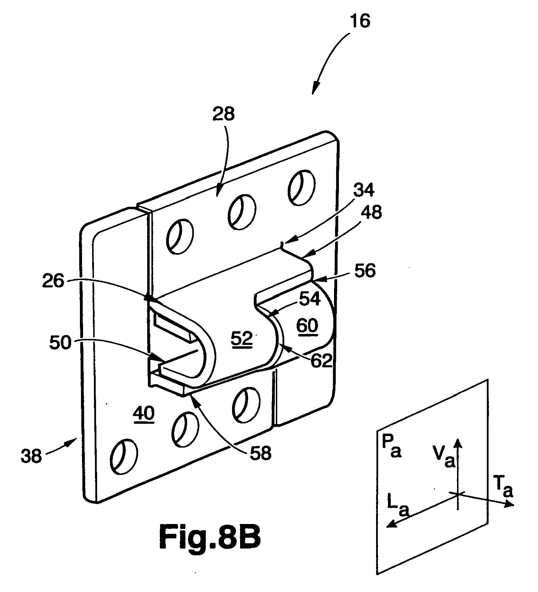

Fig. 8B illustrates an attachment arrangement 16 the first attachment panel 26 of which is the attachment panel illustrated in Fig. 8A. The second attachment panel 38 has a design which is similar, preferably identical, to the design of the first attachment panel 26 although it is rotated 180° about the attachment transversal dimension Tₐ prior to engaging with the first attachment panel 26. As such, when the first and second attachment panels 26, 38 engage, the first connection portion 48 of the first attachment panel 26 abuts the fourth connection portion 56 of the second attachment panel 38 whereas the second connection portion 50 of the first attachment panel 26 abuts the third connection portion 58 of the second attachment panel 38. Due to the flexibility in the attachment vertical dimension Vₐ of the bridging portions 52, 60 of the first and second attachment panels 26, 38, an attachment arrangement 16 which is resilient in the attachment vertical dimension Vₐ is obtained.

Furthermore, the end surface 54 of the first attachment panel 26 abuts the end surface 62 of the second attachment panel 38 such that relative motion between the first and second attachment panels 26, 38 is prevented in one direction in the attachment longitudinal dimension Tₐ as well, since load may be transferred from the attachment panel 26 to the second attachment panel 38 by their end surfaces 54, 62.

As may be realized when studying Fig. 8A and 8B, the bridging portions 52, 60 may be designed in a plurality of ways, as long as they together prevent relative motions, i.e. transfer load, between the first and second attachment panels 26, 38 in at least one direction in the attachment longitudinal dimension Lₐ. Purely by way of example, the bridging portion 52 of the first attachment panel 26 may extend from the panel longitudinal centre of the first connection portion 48 to the panel longitudinal centre of the second connection portion 50 and may have a width, i.e. an extension in the attachment longitudinal dimension Tₐ, which is approximately one third of the width of the first connection portion 48. The bridging portion 60 of the second attachment panel 38 may in turn be constituted by two bridging components (not shown), each one extending from one end of the third connection portion 58 to one end of the fourth connection portion 56 of the second attachment panel 38. In this manner, an attachment arrangement 16 is obtained which prevents relative motions between the first and second attachment panels 26, 38 in both directions in the attachment longitudinal dimension Tₐ.

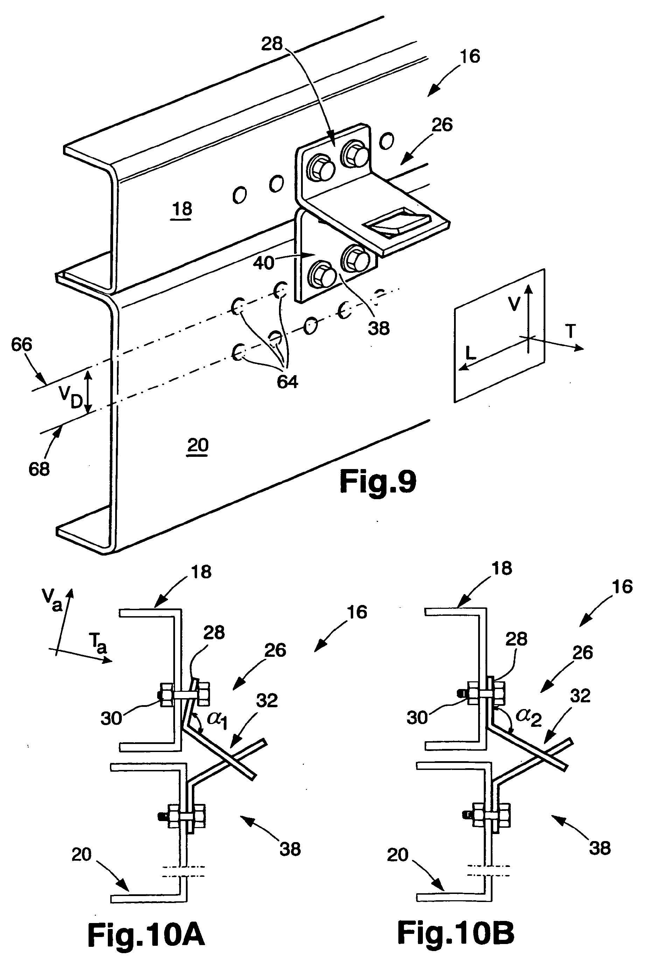

As previously been discussed in conjunction with Fig. 4, the stiffness as well as a possible pretension force of the attachment arrangement 16 of the present invention depends *inter alia* on the vertical distance between the first attachment portion 28 and the first recess 36. Should the attachment arrangement 16 comprise two attachment panels 26, 38, each one comprising an attachment portion 28, 40, the stiffness and the pretension force is dependent *inter alia* on the vertical distance between the two attachment portions 28, 40. As such, the stiffness and pretension force of the attachment arrangement 16 may be adjusted *in situ* when attaching the arrangement 16 to the first and second structures 18, 20 of a vehicle 10 using the attachment method according to the second aspect of the present invention. How this is done is described in detail hereinbelow with reference to Fig. 9. The illustration of the attachment method utilizes the Fig. 6 embodiment of the present invention, but is should be realized that the inventive method may be used for every possible embodiment of the present invention.

The first attachment panel 26 of the Fig. 9 attachment arrangement 16 is fixedly attached to a first structure 18 of a vehicle 10 which structure in Fig. 9 is a body frame. The attachment of the fist attachment panel 26 and the first structure 18 is in Fig. 9 obtained by means of a bolt connection, but other connection methods may of course be used instead, such as e.g. welding, brazing or gluing.

The first attachment panel 26 is engaged with the second attachment panel 38 and the second attachment panel 38 is then to be fixedly attached to the second structure 20 of the vehicle 10 by means of a bolt connection, which structure in Fig. 9 is the chassis frame. Should there be a difference in width between the first and second structure, i.e. should there be a difference between the two attachment portions 28, 40 in the transversal dimension T, this difference is absorbed by the attachment arrangement of the present invention since the first and second attachment panels allows some relative displacement in the transversal dimension while still providing an engagement which prevents relative motion in other directions.

Prior to attaching the second attachment panel 38 to the second structure 18, the location of the attachment portion 40 of the second attachment panel 38 is firstly adjusted. As such, the second structure 20 is provided with a plurality of openings 64 which preferably are arranged in at least two longitudinally extending rows 66, 68 located with a vertical distance V_{D} from one another. Purely by way of example, the vertical distance V_{D} may be within the range of 20 - 30 mm. Thus, prior to attaching the second attachment panel 38 to the second structure 20, a person performing the attachment method, i.e. a fitter, can firstly determine which ones of the openings along the longitudinal dimension L of the at least two longitudinally extending rows 66, 68 to use for the bolt connection. This determination is generally based on the fact that a minimum longitudinal misalignment between the first and second attachment panels 26, 38 generally is desired. Then, the fitter can select which one of the at least two longitudinally extending rows 66, 68 to use for the bolt connection. This selection is based on the desired stiffness, and possibly also a desired pretension, of the attachment arrangement 16. As such, should the fitter decide to use the openings in the first row 66 of openings, a less stiff attachment arrangement 16 is obtained as compared to the second row 68 of openings. Thus, the fitter may adjust the stiffness and/or pretension of the attachment arrangement during the attachment of the same. Should the fitter want to place the attachment portion 40 of the second attachment panel 38 in such a position that a large stiffness, or even a pretension, of the attachment arrangement 16 is obtained, the fitter may preferably utilize a tensioning device (not shown) in order to place the attachment portion 40 of the second attachment panel 38 in a desired position. Purely by way of example, such a tensioning device may be a jack or an electrically, hydraulically or pneumatically driven linear actuator.

It should be noted that although the stiffness and pretension adjustment above has been performed by selecting suitable openings in the chassis frame 20, the method could of course also be used reversely such that second attachment panel 38 is firstly attached to the chassis frame 20 and the first attachment panel 26 is then attached to the body frame 18. In this case, the body frame 18 is preferably provided with a plurality of openings in at least two longitudinally extending rows (not shown).

Figs. 10A and 10B illustrate an alternative method of obtaining a desired stiffness and/or pretension of the inventive attachment arrangement 16. As for the embodiment illustrated in Fig. 9, the embodiment of the attachment method illustrated in Figs. 10A and 10B utilizes the Fig. 6 embodiment of the present invention as an example, but it should be realized that the illustrated embodiment of the inventive method may be used for every possible embodiment of the attachment arrangement of the present invention.

Fig. 10A illustrates the attachment arrangement 16 in a condition wherein the second attachment panel 38 already has been attached to the chassis frame 20 and the first and second attachment panels 26, 38 are connected to one another such that they engage. Fig. 10A further illustrates that a tightenable connection means 30, which in Fig. 10A and 10B is illustrated by a bolt connection, has been introduced through openings (not shown) in the first attachment portion 28 and the body frame 18 but the bolt 30 has not yet been tightened. The bolt connection 30 is illustrated by one single bolt in Fig. 10A but a bolt connection 30 could of course be constituted by a plurality of bolts. As may be gleaned from Fig. 10A, the first attachment panel 26 is bent so that a first angle α₁ between the first attachment portion 28 and the first flanged portion 32 is obtained. The angle is generally in the plane defined by the attachment vertical Vₐ and attachment transversal Tₐ dimensions.

Fig. 10B illustrates the attachment arrangement 16 when the bolt 30 has been tightened to the body frame 18 and first attachment portion 28, respectively. As may be gleaned from Fig. 10B, a second angle α₂ between the first attachment portion 28 and the first flanged portion 32 has been obtained and the second angle α₂ is typically larger than the first angle α₁. As such, during the tightening of the bolt 30, the first attachment panel 26, and in particular the first flanged portion 32, has been imparted an initial deflection. Generally, the magnitude of the initial deflection will govern the stiffness, as well as a possible pretension, of the attachment arrangement 16. As such, instead of, or in addition to, adjusting the stiffness or pretension of the attachment arrangement 16 by regulating the vertical distance between the first and second attachment members, the stiffness may instead be adjusted by selecting an appropriate value of the first angle α₁ between the first attachment portion 28 and the first flanged portion 32 of the first attachment panel 26 and then tightening the first attachment panel 26 to the first structure 18 after engagement with a second attachment member 24 (not shown in Fig. 10B) attached to a second structure 20.

## Claims

1. An attachment arrangement (16) for attaching together a first (18) and a second (20) structure of a vehicle (10) having a longitudinal extension (L) and a transversal extension (T) together forming a horizontal plane (P), said arrangement comprising a first attachment member (22) adapted to be attached to said first structure (18) and a second attachment member (24) adapted to be attached to said second structure (20), at least one of said first and second attachment member (22, 24) comprising a first attachment panel (26), said first attachment member (22) further comprising a first and a second connection portion (48, 50) **characterized in that**,
said first attachment member (22) comprises a recess (36) having a recess edge such that, when said attachment arrangement (16) is in an attachment condition, said first and second attachment members are engaged by means of said first attachment panel (26) such that:
- said recess edge is arranged to abut against at least a portion of said second attachment member (24) for transferring load between said first and second attachment members (22, 24) in at least one direction substantially parallel to said horizontal plane (P), and
- said second member (24) is arranged in said recess (36) such that said first and second connection portions (48, 50) are located on opposite sides of said second attachment member (24) for transferring load between said first and second attachment members (22, 24) in a direction (V) substantially perpendicular to said horizontal plane (P).

2. The attachment arrangement (16) according to claim 1, wherein said first attachment member (22) comprises said first attachment panel (26) and said second attachment member (24) comprises a second attachment panel (38), and, when said attachment arrangement (16) is in an attachment condition, said first and second attachment members (22, 24) are engaged by means of said first and second attachment panels (26, 38).

3. The attachment arrangement (16) according to claim 1 or 2, wherein said second attachment member (24) comprises a second recess (46) in which said first member (22) is adapted to be arranged.

4. The attachment arrangement (16) according to any one the preceding claims, wherein said first attachment member (22) comprises a first attachment portion (28) adapted to be attached to said first structure (18) and extending in an attachment longitudinal dimension (Lₐ) and an attachment vertical dimension (Vₐ) together forming an attachment plane (Pₐ) such that, when said attachment arrangement (16) is in an attachment condition, said attachment vertical dimension (Vₐ) is substantially perpendicular to said horizontal plane (P), said first attachment member (22) further having an attachment transversal dimension (Tₐ) extending substantially perpendicular from said attachment plane (Pₐ)

5. The attachment arrangement (16) according to claim 4, wherein, when said attachment arrangement (16) is in an attachment condition, said first and second attachment members (22, 24) are engaged by means of said first attachment panel (26) such that they are arranged to transfer load in at least one direction substantially parallel to said attachment longitudinal dimension (Lₐ).

6. The attachment arrangement (16) according to claim 4 or 5, wherein, when said attachment arrangement (16) is in an attachment condition, said first and second attachment members (22, 24) are engaged by means of said first attachment panel (26) such that they are arranged to transfer load in at least one direction substantially parallel to said attachment transversal dimension (Tₐ).

7. The attachment arrangement (16) according to any one the preceding claims wherein, when said attachment arrangement (16) is in an attachment condition, said first and second attachment members (22, 24) are engaged by means of said attachment panel (26) such that they are arranged to transfer load in both an upward and downward direction in a dimension substantially perpendicular to said horizontal plane (P).

8. The attachment arrangement (16) according to any one of claims 4 - 7, wherein said first attachment member (22) is shaped such that said first and second connection portions (48, 50) are located at substantially the same distance from said first attachment portion (28) in said attachment transversal dimension (Tₐ).

9. The attachment arrangement (16) according to any one of claims 4 - 8, wherein said second attachment member (24) comprises a second attachment portion (40) adapted to be attached to said second structure (20), said first attachment member being shaped such that it comprises a third and a fourth connection portion (56, 58) located at substantially the same distance from said second attachment portion (40) in said attachment transversal dimension (Tₐ).

10. The attachment arrangement (16) according to any one of the preceding claims, wherein said first attachment panel (26) provides a resilient attachment of said first and second structures (18, 20) in a direction substantially perpendicular to said horizontal plane (P).

11. The attachment arrangement (16) according to any one of the preceding claims, wherein at least one of said first or second attachment members (22, 24) is adapted to be attached to said first or second structure (18, 20) by means of a tightenable connection arrangement (30), such as a bolt connection.

12. A vehicle (10) comprising a chassis (12) and a body (14), **characterized in that** said chassis (12) and said body (14) are attached to one another by an attachment system comprising at least one attachment arrangement (16) according to any one of the preceding claims.

13. A method of attaching together a first and a second structure (18, 20) of a vehicle (10), utilizing the attachment arrangement (16) according to any one of claims 1 - 11, wherein the method comprises the steps of:
a) fixedly attaching one of said first or second attachment members (22, 24) to said first or second structure (18, 20);
b) connecting said first and second attachment members (22, 24) such that they engage, and
c) fixedly attaching the remaining one of said first or second attachment members (22, 24) to the remaining one of said first or second structure (18, 20).

14. The method according to claim 13, wherein said first attachment member (22) comprises an attachment portion (28) adapted to be attached to said first structure (18) and said second attachment member (24) comprises a second attachment portion (40) adapted to be attached to said second structure (20), wherein the method further comprises the step of selecting an appropriate distance perpendicular to said plane (P) between said first and second attachment portions (28, 40) in order to obtain a predetermined stiffness and/or pretension of said attachment arrangement (16), prior to the step of fixedly attaching the remaining one of said first or second attachment members (22, 24).

15. The method according to claim 13 or 14, wherein said first attachment member (22) comprises said first attachment panel (26) comprising an attachment portion (28) adapted to be attached to said first structure (18) and a flanged portion (32), said first attachment panel (26) forming a first angle (α₁) between said first attachment portion (28) and said first flanged portion (32) when said attachment arrangement (16) is in an un-attached condition, wherein the method further comprises the step of, when said second attachment member (24) has been attached to said second structure (20) and said first and second attachment members (22, 24) are connected, fixedly attaching said first attachment member (22) to said first structure by means of a tightenable connection arrangement (30), such as a bolt connection, the method further comprising the step of tightening said connection arrangement (30) such that a second angle (α₂) between the first attachment portion (28) and the first flanged portion (32) is obtained, which second angle (α₂) differs from said first angle (α₁), such that said attachment arrangement (16) becomes stiffened and/or pretensioned.

## Patentansprüche

1. Befestigungsanordnung (16) zur Befestigung aneinander eines ersten (18) und eines zweiten (20) Bauteils eines Fahrzeugs (10), das eine Längserstreckung (L) und eine Quererstreckung (T) aufweist, die zusammen eine horizontale Ebene (P) bilden, wobei die Anordnung ein erstes Befestigungselement (22), das zur Befestigung an dem ersten Bauteil (18) ausgelegt ist, und ein zweites Befestigungselement (24) umfasst, das zur Befestigung an dem zweiten Bauteil (20) ausgelegt ist, wobei wenigstens eines von dem ersten und zweiten Befestigungselement (22, 24) eine erste Befestigungsplatte (26) umfasst, wobei das erste Befestigungselement (22) außerdem einen ersten und einen zweiten Verbindungsabschnitt (48, 50) umfasst, **dadurch gekennzeichnet, dass**
- das erste Befestigungselement (22) eine Aussparung (36) mit einem Aussparungsrand aufweist, so dass, wenn sich die Befestigungsanordnung (16) in einem Befestigungszustand befindet, das erste und das zweite Befestigungselement mittels der ersten Befestigungsplatte (26) so in Eingriff stehen, dass
- der Aussparungsrand so angeordnet ist, dass er wenigstens gegen einen Abschnitt des zweiten Befestigungselements (24) anliegt, um eine Last zwischen dem ersten und dem zweiten Befestigungselement (22, 24) in wenigstens einer Richtung zu übertragen, die im Wesentlichen parallel zu der horizontalen Ebene (P) ist, und
- das zweite Element (24) so in der Aussparung (36) angeordnet ist, dass der erste und der zweite Verbindungsabschnitt (48, 50) auf entgegengesetzten Seiten des zweiten Befestigungselements (24) angeordnet sind, um eine Last zwischen dem ersten und dem zweiten Befestigungselement (22, 24) in einer Richtung (V) zu übertragen, die im Wesentlichen senkrecht zu der horizontalen Ebene (P) ist.

2. Befestigungsanordnung (16) nach Anspruch 1, wobei das erste Befestigungselement (22) die erste Befestigungsplatte (26) umfasst und das zweite Befestigungselement (24) eine zweite Befestigungsplatte (38) umfasst und, wenn sich die Befestigungsanordnung (16) in einem Befestigungszustand befindet, das erste und das zweite Befestigungselement (22, 24) mittels der ersten und der zweiten Befestigungsplatte (26, 38) in Eingriff stehen.

3. Befestigungsanordnung (16) nach Anspruch 1 oder 2, wobei das zweite Befestigungselement (24) eine zweite Aussparung (46) umfasst, in der das erste Element (22) angeordnet werden kann.

4. Befestigungsanordnung (16) nach einem der vorhergehenden Ansprüche, wobei das erste Befestigungselement (22) einen ersten Befestigungsabschnitt (28) umfasst, der so ausgelegt ist, dass er an dem ersten Bauteil (18) angebracht werden kann und sich in einer Befestigungslängsdimension (Lₐ) und einer Befestigungsvertikaldimension (Vₐ) erstreckt, die zusammen eine Befestigungsebene (Pₐ) bilden, so dass, wenn sich die Befestigungsanordnung (16) in einem Befestigungszustand befindet, die Befestigungsvertikaldimension (Vₐ) im Wesentlichen senkrecht zu der horizontalen Ebene (P) ist, wobei das erste Befestigungselement (22) außerdem eine Befestigungsquerdimension (Tₐ) aufweist, die sich im Wesentlichen senkrecht zu der Befestigungsebene (Pₐ) erstreckt.

5. Befestigungsanordnung (16) nach Anspruch 4, wobei, wenn sich die Befestigungsanordnung (16) in einem Befestigungszustand befindet, das erste und das zweite Befestigungselement (22, 24) mittels der ersten Befestigungsplatte (26) so in Eingriff stehen, dass sie zur Übertragung einer Last in wenigstens einer Richtung angeordnet sind, die im Wesentlichen parallel zu der Befestigungslängsdimension (Lₐ) ist.

6. Befestigungsanordnung (16) nach Anspruch 4 oder 5, wobei, wenn sich die Befestigungsanordnung (16) in einem Befestigungszustand befindet, das erste und das zweite Befestigungselement (22, 24) mittels der ersten Befestigungsplatte (26) so in Eingriff stehen, dass sie zur Übertragung einer Last in wenigstens einer Richtung angeordnet sind, die im Wesentlichen parallel zu der Befestigungsquerdimension (Tₐ) ist.

7. Befestigungsanordnung (16) nach einem der vorhergehenden Ansprüche, wobei, wenn sich die Befestigungsanordnung (16) in einem Befestigungszustand befindet, das erste und das zweite Befestigungselement (22, 24) mittels der Befestigungsplatte (26) so in Eingriff stehen, dass sie zur Übertragung einer Last sowohl in einer Aufwärtsrichtung als auch in einer Abwärtsrichtung in einer Dimension angeordnet sind, die im Wesentlichen senkrecht zu der horizontalen Ebene (P) verläuft.

8. Befestigungsanordnung (16) nach einem der Ansprüche 4 - 7, wobei das erste Befestigungselement (22) so geformt ist, dass der erste und der zweite Verbindungsabschnitt (48, 50) im Wesentlichen im gleichen Abstand von dem ersten Befestigungsabschnitt (28) in der Befestigungsquerdimension (Tₐ) angeordnet sind.

9. Befestigungsanordnung (16) nach einem der Ansprüche 4 - 8, wobei das zweite Befestigungselement (24) einen zweiten Befestigungsabschnitt (40) umfasst, der so ausgelegt ist, dass er an dem zweiten Bauteil (20) befestigt werden kann, wobei das erste Befestigungselement so geformt ist, dass es einen dritten und einen vierten Verbindungsabschnitt (56, 58) umfasst, die im Wesentlichen im gleichen Abstand von dem zweiten Befestigungsabschnitt (40) in der Befestigungsquerdimension (Tₐ) angeordnet sind.

10. Befestigungsanordnung (16) nach einem der vorhergehenden Ansprüche, wobei die erste Befestigungsplatte (26) eine elastische Befestigung des ersten und des zweiten Bauteils (18, 20) in einer Richtung schafft, die im Wesentlichen senkrecht zu der horizontalen Ebene (P) ist.

11. Befestigungsanordnung (16) nach einem der vorhergehenden Ansprüche, wobei wenigstens eines von dem ersten oder dem zweiten Befestigungselement (22, 24) so ausgelegt ist, dass es an dem ersten oder zweiten Bauteil (18, 20) mittels einer anziehbaren Verbindungsanordnung (30), wie z. B. einer Bolzenverbindung, angebracht werden kann.

12. Fahrzeug (10) mit einem Chassis (12) und einer Karosserie (14), **dadurch gekennzeichnet, dass** das Chassis (12) und die Karosserie (14) aneinander durch ein Befestigungssystem mit wenigstens einer Befestigungsanordnung (16) nach einem der vorhergehenden Ansprüche befestigt sind.

13. Verfahren zur Befestigung eines ersten und eines zweiten Bauteils (18, 20) eines Fahrzeugs (10) aneinander, wobei die Befestigungsanordnung (16) nach einem der Ansprüche 1 - 11 verwendet wird, wobei das Verfahren die Schritte umfasst:
(a) feste Anbringung eines von dem ersten oder dem zweiten Befestigungselement (22, 24) an dem ersten oder zweiten Bauteil (18, 20),
(b) Verbindung des ersten und des zweiten Befestigungselements (22, 24), so dass sie in Eingriff stehen, und
(c) feste Anbringung des verbleibenden von dem ersten und dem zweiten Befestigungselement (22, 24) an dem verbleibenden von dem ersten oder dem zweiten Bauteil (18, 20).

14. Verfahren nach Anspruch 13, wobei das erste Befestigungselement (22) einen Befestigungsabschnitt (28) umfasst, der so ausgelegt ist, dass er an dem ersten Bauteil (18) angebracht werden kann, und das zweite Befestigungselement (24) einen zweiten Befestigungsabschnitt (40) aufweist, der so ausgelegt ist, dass er an dem zweiten Bauteil (20) angebracht werden kann, wobei das Verfahren außerdem den Schritt umfasst, dass ein geeigneter Abstand senkrecht zu der Ebene (P) zwischen dem ersten und dem zweiten Befestigungsabschnitt (28, 40) gewählt wird, um eine vorherbestimmte Steifheit und/oder Vorspannung der Befestigungsanordnung (16) vor dem Schritt der festen Anbringung des verbleibenden von dem ersten oder dem zweiten Befestigungselement (22, 24) zu erreichen.

15. Verfahren nach Anspruch 13 oder 14, wobei das erste Befestigungselement (22) die erste Befestigungsplatte (26) umfasst, die einen ersten Befestigungsabschnitt (28), der zur Befestigung an dem ersten Bauteil (18) ausgelegt ist, und einen Flanschabschnitt (32) umfasst, wobei die erste Befestigungsplatte (26) einen ersten Winkel (α₁) zwischen dem ersten Befestigungsabschnitt (28) und dem ersten Flanschabschnitt (32) bildet, wenn die Befestigungsanordnung (16) sich in einem nicht befestigten Zustand befindet, wobei das Verfahren außerdem den Schritt umfasst, dass, wenn das zweite Befestigungselement (24) an dem zweiten Bauteil (20) befestigt wurde und das erste und zweite Befestigungselement (22, 24) verbunden sind, das erste Befestigungselement (22) fest an dem ersten Bauteil mittels einer anziehbaren Verbindungsanordnung (30), wie z. B. einer Bolzenverbindung, angebracht wird, wobei das Verfahren außerdem den Schritt umfasst, dass die Verbindungsanordnung (30) so angezogen wird, dass ein zweiter Winkel (α₂) zwischen dem ersten Befestigungsabschnitt (28) und dem ersten Flanschabschnitt (32) erhalten wird, wobei sich der zweite Winkel (α₂) von dem ersten Winkel (α₁) unterscheidet, so dass die Befestigungsanordnung (16) versteift und/oder vorgespannt wird.

## Revendications

1. Agencement de fixation (16) pour fixer ensemble une première (18) et une seconde (20) structure d'un véhicule (10) ayant une étendue longitudinale (L) et une étendue transversale (T) formant ensemble un plan horizontal (P), l'agencement comprenant un premier élément de fixation (22) adapté pour être fixé sur la première structure (18) et un second élément de fixation (24) adapté pour être fixé sur la seconde structure (20), au moins un des premier et second éléments de fixation (22, 24) comprenant un premier panneau de fixation (26), le premier élément de fixation (22) comprenant de plus une première et une deuxième parties de liaison (48, 50) **caractérisé en ce que**,
le premier élément de fixation (22) comprend un évidement (36) ayant un bord d'évidement de sorte que, lorsque l'agencement de fixation (16) est dans un état de fixation, les premier et second éléments de fixation sont en prise par l'intermédiaire du premier panneau de fixation (26) de sorte que :
- le bord d'évidement est agencé pour être en butée contre au moins une partie du second élément de fixation (24) pour transférer une charge entre les premier et second éléments de fixation (22, 24) dans au moins une direction sensiblement parallèle au plan horizontal (P), et
- le second élément (24) est agencé dans l'évidement (36) de sorte que les première et deuxième parties de liaison (48, 50) sont situées sur des côtés opposés du second élément de fixation (24) pour transférer une charge entre les premier et second éléments de fixation (22, 24) dans une direction (V) sensiblement perpendiculaire au plan horizontal (P).

2. Agencement de fixation (16) selon la revendication 1, dans lequel le premier élément de fixation (22) comprend le premier panneau de fixation (26) et le second élément de fixation (24) comprend un second panneau de fixation (38), et, lorsque l'agencement de fixation (16) est dans un état de fixation, les premier et second éléments de fixation (22, 24) sont en prise par l'intermédiaire des premier et second panneaux de fixation (26, 38).

3. Agencement de fixation (16) selon les revendications 1 ou 2, dans lequel le second élément de fixation (24) comprend un second évidement (46) le premier élément (22) étant adapté pour être agencé dans celui-ci.

4. Agencement de fixation (16) selon l'une quelconque des revendications précédentes, dans lequel le premier élément de fixation (22) comprend une première partie de fixation (28) adaptée pour être fixée sur la première structure (18) et s'étendant dans une dimension longitudinale de fixation (Lₐ) et une dimension verticale de fixation (Vₐ) formant ensemble un plan de fixation (Pₐ) de sorte que, lorsque l'agencement de fixation (16) est dans un état de fixation, la dimension verticale de fixation (Vₐ) est sensiblement perpendiculaire au plan horizontal (P), le premier élément de fixation (22) ayant de plus une dimension transversale de fixation (Tₐ) s'étendant sensiblement perpendiculairement à partir du plan de fixation (Pₐ).

5. Agencement de fixation (16) selon la revendication 4, dans lequel, lorsque l'agencement de fixation (16) est dans un état de fixation, les premier et second éléments de fixation (22, 24) sont en prise par l'intermédiaire du premier panneau de fixation (26) de sorte qu'ils sont agencés pour transférer une charge dans au moins une direction sensiblement parallèle à la dimension longitudinale de fixation (Lₐ).

6. Agencement de fixation (16) selon les revendications 4 ou 5, dans lequel, lorsque l'agencement de fixation (16) est dans un état de fixation, les premier et second éléments de fixation (22, 24) sont en prise par l'intermédiaire du premier panneau de fixation (26) de sorte qu'ils sont agencés pour transférer une charge dans au moins une direction sensiblement parallèle à la dimension transversale de fixation (Tₐ).

7. Agencement de fixation (16) selon l'une quelconque des revendications précédentes, dans lequel, lorsque l'agencement de fixation (16) est dans un état de fixation, les premier et second éléments de fixation (22, 24) sont en prise par l'intermédiaire du panneau de fixation (26) de sorte qu'ils sont agencés pour transférer une charge dans les deux directions vers le haut et vers le bas dans une dimension sensiblement perpendiculaire au plan horizontal (P).

8. Agencement de fixation (16) selon l'une quelconque des revendications 4 à 7, dans lequel le premier élément de fixation (22) est formé de telle sorte que les première et deuxième parties de liaison (48, 50) sont situées sensiblement à la même distance à partir de la première partie de fixation (28) dans la dimension transversale de fixation (Tₐ).

9. Agencement de fixation (16) selon l'une quelconque des revendications 4 à 8, dans lequel le second élément de fixation (24) comprend une seconde partie de fixation (40) adaptée pour être fixée sur la seconde structure (20), le premier élément de fixation étant formé de sorte qu'il comporte une troisième et une quatrième parties de liaison (56, 58) situées sensiblement à la même distance à partir de la seconde position de fixation (40) dans la dimension transversale de fixation (Tₐ).

10. Agencement de fixation (16) selon l'une quelconque des revendications précédentes, dans lequel le premier panneau de fixation (26) fournit une fixation élastique des première et seconde structures (18, 20) dans une direction sensiblement perpendiculaire au plan horizontal (P).

11. Agencement de fixation (16) selon l'une quelconque des revendications précédentes, dans lequel au moins un des premier et second éléments de fixation (22, 24) est adapté pour être fixé sur la première ou seconde structure (18, 20) par l'intermédiaire d'un agencement de liaison pouvant être serré (30) telle qu'une liaison par boulons.

12. Véhicule (10) comprenant un châssis (12) et une carrosserie (14), **caractérisé en ce que** le châssis (12) et la carrosserie (14) sont fixés l'un à l'autre par un système de fixation comprenant au moins un agencement de fixation (16) selon l'une quelconque des revendications précédentes.

13. Procédé de fixation, ensemble, d'une première et d'une seconde structure (18, 20) d'un véhicule (10), utilisant l'agencement de fixation (16) selon l'une quelconque des revendications 1 à 11, dans lequel le procédé comprend les étapes consistant à :
a) fixer de manière fixe un des premier ou second éléments de fixation (22, 24) sur la première ou seconde structure (18, 20) ;
b) relier les premier et second éléments de fixation (22, 24) de sorte qu'ils soient en prise, et
c) fixer de manière fixe celui restant des premier ou second éléments de fixation (22, 24) sur celle restante de la première ou seconde structure (18, 20).

14. Procédé selon la revendication 13, dans lequel le premier élément de fixation (22) comprend une partie de fixation (28) adaptée pour être fixée sur la première structure (18) et le second élément de fixation (24) comprend une seconde partie de fixation (40) adaptée pour être fixée sur la seconde structure (20), dans lequel le procédé comprend de plus l'étape consistant à sélectionner une distance appropriée perpendiculairement au plan (P) entre les première et seconde parties de fixation (28, 40) afin d'obtenir une rigidité et/ou une pré-tension prédéterminée de l'agencement de fixation (16), avant l'étape consistant à fixer de manière fixe celui restant des premier ou second éléments de fixation (22, 24).

15. Procédé selon les revendications 13 ou 14, dans lequel le premier élément de fixation (22) comprend un premier panneau de fixation (26) comprenant une partie de fixation (28) adaptée pour être fixée sur la première structure (18) et une partie munie d'un rebord (32), le premier panneau de fixation (26) formant un premier angle (α₁) entre la première partie de fixation (28) et la première partie munie d'un rebord (32) lorsque l'agencement de fixation (16) est dans un état non fixé, dans lequel le procédé comprend de plus l'étape consistant, lorsque le second élément de fixation (24) a été fixé sur la seconde structure (20) et les premier et second éléments de fixation (22, 24) sont reliés, à fixer de manière fixe le premier élément de fixation (22) sur la première structure par l'intermédiaire d'un agencement de liaison pouvant être serré (30), tel qu'une liaison par boulons, le procédé comprenant de plus l'étape consistant à insérer l'agencement de liaison (30) de sorte qu'un second angle (α₂) entre la première partie de fixation (28) et la première partie munie d'un rebord (32) est obtenu, lequel second angle (α₂) est différent du premier angle (α₁) de sorte que l'agencement de fixation (16) devient raidi et/ou pré-tendu.
